# EUROPEAN PATENT APPLICATION

(11) **EP 1 172 987 A2**
(43) Date of publication of application: **16.01.2002**
(21) Application number: 01123708.8
(22) Date of filing: 14.09.1998
(51) Int. Cl.: H04L 29/06, H04N 7/173

(54) **System for the transmission of data**

(30) Priority: 29.09.1997 NL 1007153
(62) Divisional of application: 98950038.4
(71) Applicant: Koninklijke KPN N.V., 9726 AE Groningen (NL)
(72) Inventor: Albers, Onno Florian, 2522 VL The Hague (NL); Bol, Petrus Hendrikus Cornelis, 2592 SZ The Hague (NL); Koster, Arian, 3643 AG Mijdrecht (NL); Von Rooyen, Antonius Petrus Henricus, 2723 XP Zoetermeer (NL)
(74) Representative: Wuyts, Koenraad Maria

(57) **Abstract**

System for the transmission of data comprising at least one telecommunications network (2;3;5;6), a first (4) and a second (7;8) server and at least one terminal (1). The terminal (1) comprises connection means (10,14) for setting up links between the terminal (1) and the first and second server by way of the telecommunications network (2;3;5;6). The connection means (10,14) comprise memory loaded with an added software module. The software module is provided with parameters from the first server (4), after which it is activated for setting up, as a function of the provided parameters, the link between the terminal (1) and the second server (7;8). Using a payment (09xx) number in a set of parameters enables a service provider on the second server to cash in money for the provision of his service; disconnecting from the first server before setting up the link with the second server obviates the need for dual modems or telecommunications channels.

## Description

### BACKGROUND OF THE INVENTION

The invention relates to a system for the transmission of data, comprising:
- at least one telecommunications network,
- a first server, and
- at least one terminal comprising connection means for setting up a link for a session with the first server by way of the telecommunications network and for setting up automatically, during a session, by way of the telecommunications network, a link with a second server as a function of a code stored in the first server, such as a telephone number, it being possible for the first server and the second server to be one and the same.

Features of such a system are known from WO 96/38962. In this known system two separate networks are used. Data in the form of references to multimedia presentations are accessed via a computer network, e.g. the Internet, while the presentations themselves are downloaded to the terminal of a user via a second network with greater bandwidth and/or guaranteed data rate and availability. Choosing the presentation to be downloaded is a relatively easy and quick process when using the Internet; using the second type of network enables the viewing of, or the listening to, high-quality presentations in real time.

The known system works as follows. The user of the terminal, which terminal can be a PC, calls in on a modem pool and is connected to the Internet. The terminal of the user communicates with a server by way of the web browser with which it is loaded. By clicking so-called references on the video screen using the mouse associated with the terminal, the user may look up and choose services, which are being offered by way of the Internet. Such services are, e.g., video presentations, such as films or video clips. The web browser of the terminal seeks contact, by way of the second network, with the server in which the service desired by the user resides. This server transmits the information associated with the desired service via the second network to the terminal of the user.

An other prior-art system is known from several publications on the Internet, and which was used, for a relatively short period, by Audiotex Connection Inc. See, e.g., http://www.ftc.gov/os/1998/9802/beylen.cmp.htm. In this system, the modem connection from the terminal to the local Internet service provider was terminated, the modem in the terminal was directed to dial an (international) telephone number to reconnect to the Internet, after which the service, advertised just before the second connection was made, was provided via the second connection. The user of the terminal had to pay for the (international) telephone call, used for the second connection, and Audiotex received payments for the traffic generated in this way. It is known that the second connection via the special and expensive extension was maintained, even when the user of the terminal surfed to other websites on the Internet, he no longer made use of the service and was under no obligation to continue to pay for it. Only when he switched off his terminal or modem, that telephone connection was terminated. That meant that the user of the terminal incurred costs for an expensive connection even after it had been used for the original purpose.

At the moment, cashing in money for services offered via the Internet often still is a problem.

### SUMMARY OF THE INVENTION

The system according to the invention comprises:
- at least one telecommunications network,
- a first server, and
- at least one terminal comprising connection means for setting up a link for a session with the first server by way of the telecommunications network and for setting up automatically, during a session, by way of the telecommunications network, a link with a second server as a function of a code stored in the first server, such as a telephone number, it being possible for the first server and the second server to be one and the same.
The connection means in the system according to the invention comprise memory loaded with an added software module, the added software module, prior to activation, being provided with parameters comprising the code stored in the first server, and the added software module is subsequently activated for freeing, firstly, the link via the telecommunications network between the terminal and the first server and for subsequently setting up the link between the terminal and the second server via the telecommunications network.

A first embodiment of the system according to the invention is characterised in that the added software module is provided with parameters by transmitting those parameters from the first server to the terminal by way of the telecommunications network.

A second embodiment of the system according to the invention is characterised in that, each time the first server provides the added software module with parameters, those provided parameters replace the parameters available to the added software module after a prior activation of the added software module.

A third embodiment of the system according to the invention is characterised in that, on freeing the link between the terminal and the second server, the link between the terminal and the first server is re-established.

A fourth embodiment of the system according to the invention is characterised in that the telephone number, stored in the first server, is a payment number.

The invention also relates to a method and a server for use in the system according to the invention.

### REFERENCES

- WO 96/38962: Computer network and communication network integration system
http://www.ftc.gov/os/1998/9802/beylen.cmp.htm
USA Federal Trade Commission in the matter of Beylen Telecom, Docket No. C-3782

### EXEMPLARY EMBODIMENTS

The invention will be explained in greater detail by reference to exemplary embodiments shown in the Figures. In this connection:
FIG. 1 shows a block diagram of a system according to an exemplary embodiment of the invention,
FIG. 2 shows a block diagram of a terminal for use in a system according to the invention,
FIG. 3 shows an alternative exemplary embodiment of the invention, and
FIG. 4 shows the video screen of the terminal having an HTML page displayed thereon.

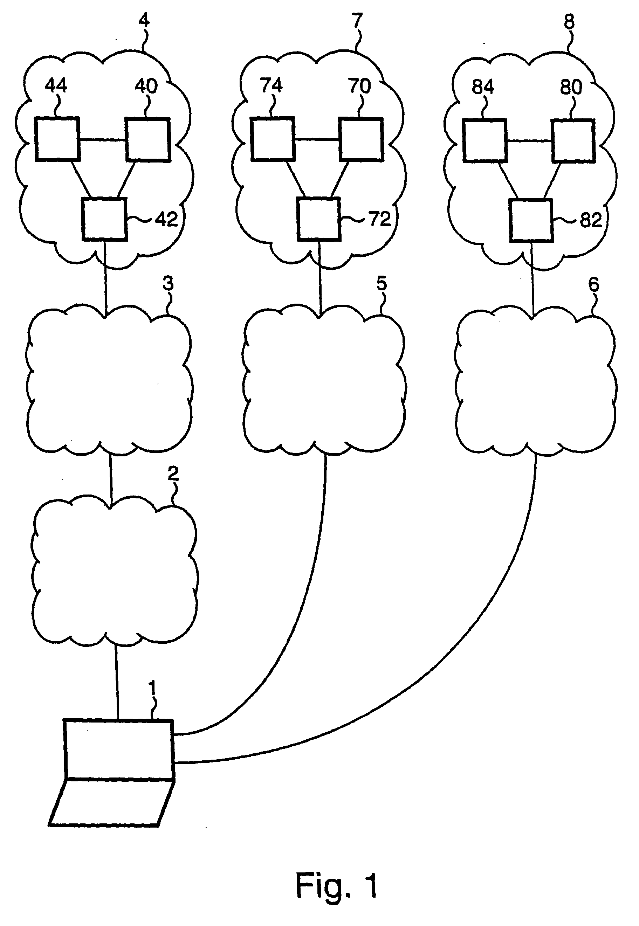

FIG. 1 shows a block diagram of a system according to the invention. The system comprises a terminal 1 of a user. Of course, the system may comprise many more terminals than the one shown, but for clarity's sake there is shown only one in the figure. Said terminal 1 is coupled, by way of a calling-in network 2, to a multimedia network 3. The calling-in network 2 is, e.g., a telecommunications network known per se, such as a Public Switched Telephony Network (PSTN) or an Integrated Services Digital Network (ISDN). The multimedia network 3 is, e.g., the Internet. The system further comprises a first server 4, which is coupled to the multimedia network 3, and which is provided with storage means 40, transmitter/receiver means 42, and a processor apparatus 44 which comprises a processor having an associated memory. The system further comprises a first telecommunications network 5 and a second telecommunications network 6, to which the terminal 1 is coupled. The first telecommunications network is, e.g., a Public Switched Telephony Network (PSTN). The second telecommunications network 6 is, e.g., an Integrated Services Digital Network (ISDN). Finally, the system comprises a second server 7, which is coupled to the PSTN network 5, and a third server 8, which is coupled to the ISDN network 6. The second server 7 is provided with storage means 70, transmitter/receiver means 72, and a processor apparatus 74 having an associated memory. The third server 8 is provided with storage means 80, transmitter/receiver means 82, and a processor apparatus 84 having an associated memory. The transmitter/receiver means 72 of the second server 7 consist of a so-called modem pool - a group of analogue modems. The transmitter/receiver means 82 of the third server 8 consist of a group of ISDN interfaces. In FIG. 1, the terminal 1 is shown as being coupled to the Internet 3, the PSTN network 5, and the ISDN network 6. This does not imply, however, that the terminal 1 has a simultaneous connection with said three networks. The terminal 1 has a connection with only one of said networks at a time.

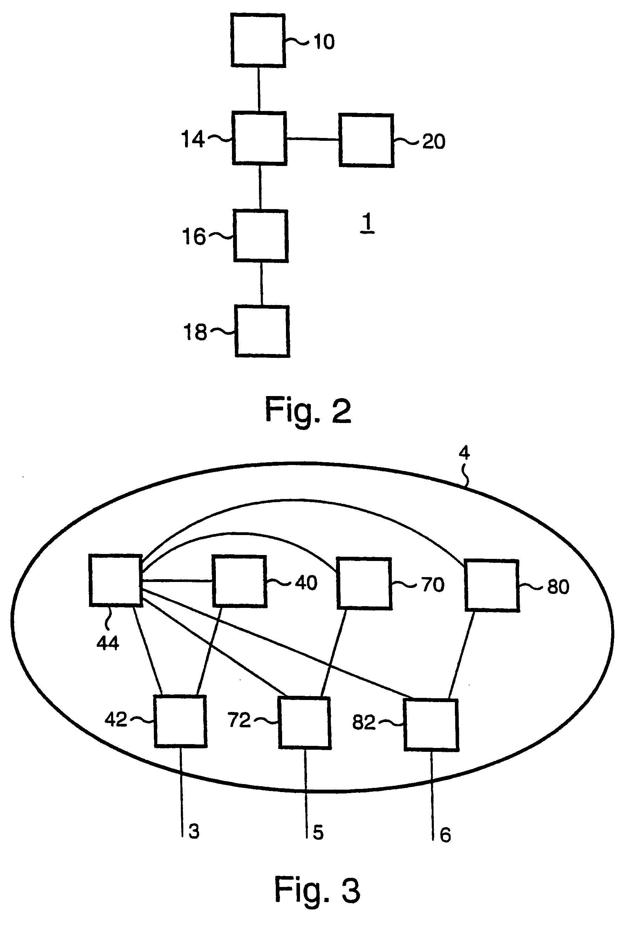

FIG. 2 shows a block diagram of a terminal 1 for use in the system according to the invention. Of the terminal 1, there are shown only those elements which are of importance for understanding the invention. The terminal 1 comprises an analogue modem or ISDN interface 10. The terminal may possibly be provided with both an analogue modem and an ISDN interface. The terminal 1 further comprises a processor apparatus 14 coupled to the modem or ISDN interface, which comprises a processor with associated memory. In the memory, there is stored, inter alia, software of a so-called web browser, which is used by the processor apparatus 14 to set up links via the Internet 3 shown in FIG. 1. Said web browser will be described in greater detail below. The modem or ISDN interface 10 and the processor apparatus 14 loaded with the web browser together form connection means for setting up links with servers. The terminal 1 further comprises a video card 16 coupled to the processor apparatus 14, which makes it possible to show video images, and a video screen 18 coupled to the video card 16. The terminal 1 further comprises a keyboard and a mouse 20, which are coupled to the processor apparatus 14.

The web browser in the terminal 1 consists of a standard web browser, e.g., Netscape Navigator or Microsoft Internet Explorer. Furthermore, the processor apparatus 14 is loaded with a software module which may be called up from the web browser. The software module makes it possible to set up another IP link than the Internet link active at that point in time, namely, in the event that the user clicks a special reference in an HTML page transmitted by the first server 4. The processor apparatus 44 of the server 4 is loaded with software for transmitting such HTML pages and suitable for communicating, using the Internet protocol, with the terminals 1 of users. The HTML pages comprise a reference to a file stored in the server 4, in which the following parameters for the software module are stored:
- the telephone number which must be used to call in on the second server 7 or third server 8 via either of the two networks 5 and 6,
- a parameter which indicates whether the calling in must take place with an analogue modem or via ISDN, or that both are possible,
- the name of the HTML page which must be shown after the new link has been set up.

If a user clicks a special reference on an HTML page transmitted by the first server 4, the software module is called up. As soon as the software module has verified whether the terminal 1 is provided with the correct calling-out eguipment, and possibly after confirmation by the user, the link which is present via the Internet 3 between the terminal 1 and the first server 4, is phased out. On the basis of the telephone number in the file, to which the HTML page refers, there is subsequently set up, by way of either of the two networks 5 and 6, a link to the second server 7 or the third server 8. The name of the HTML page, which must be shown after the new link has been set up, is sent along. This is the HTML page which will subsequently be shown by the second or third server. Therefore, the software module is designed to phase out, during a browser session, the link via the Internet 3 to the first server 4 and subsequently, as a function of the telephone number stored in the first server 4, to set up a new link by way of either of the telecommunications networks 5 and 6 to the second server 7 or the third server 8. The file in which the parameters are stored may be transmitted by the first server 4, together with the HTML page, to the terminal 1, whereafter the software module, if the user clicks the special reference, already has the file locally available and may directly use the parameters stored therein to set up the link to the second server 7 or third server 8. It may also be that the file is not sent along with the HTML page. If the user then clicks the special reference, the software module must first read out the file from the first server 4 and may only then, as a function of the parameters stored in the file, start to set up the link to second server 7 or third server 8.

The software module should preferably give off an error message in the following cases:
- if the user uses the software module but does not dispose of the correct calling-out equipment. Such is the case, e.g., if the user has no ISDN but does click a reference which the software module wants to use to set up a link via ISDN;
- if the new link to be set up is not realised within a specific period of time.

Furthermore, the software module preferably also works if the user has no fixed IP link and is therefore off line.

FIG. 3 shows an alternative exemplary embodiment of the invention in which the first server, the second server and the third server are formed by one single server 4. The server 4 comprises only one single processor apparatus, provided with software to be able to communicate with the terminal 1 via the Internet 3, the PSTN network 5, and the ISDN network 6, which are shown in FIG. 1. The transmitter/receiver means 42 are coupled to the Internet 3, the transmitter/receiver means 72 are coupled to the PSTN network 5, and the transmitter/receiver means 82 are coupled to the ISDN network 6.

The system according to the invention may be used, e.g., to offer a user, by way of the Internet and without additional payment, a video presentation with a (low) basic quality and subsequently to offer him/her the opportunity of viewing the video presentation with a higher quality via the PSDN network 5, or with a still higher quality via the ISDN network 6. For this purpose, the video presentation with the basic quality is stored in the storage means 40 of the first server 4, the video presentation with the higher quality is stored in the storage means 70 of the second server 7, and the video presentation with the still higher quality is stored in the storage means 80 of the third server 8. The user may approach the server 4 in the known manner via the Internet 3, and gets to see an HTML page. Said HTML page includes a reference to a video presentation. By clicking said reference with his/her mouse, the user gets to see the video presentation via the Internet 3. A problem of the Internet 3 is that no bandwidth is guaranteed for the link between the terminal 1 and the server 4, nor is it guaranteed that a specific throughput of data is transmitted in the direction of the terminal 1. As a result, the quality of the video presentation via the Internet 3 in most cases is low and may additionally vary considerably as a function of the activity on the Internet 3. That is why a video presentation received via the Internet 3 often comes across somewhat jerkily.

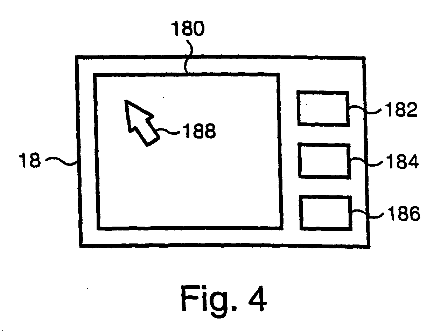

FIG. 4 shows a video presentation received on the video screen 18 of the terminal 1. The video portion of the video presentation is displayed in a box 180 intended for that purpose. Besides said box, according to the invention there are displayed a first reference 182, a second reference 184, and a third reference 186. The first reference 182 refers to the video presentation with the basic quality, the second reference 184 refers to the video presentation with the higher quality, and the third reference 186 refers to the video presentation with the still higher quality. Suppose that the video presentation with the basic quality is received by the terminal 1 via the Internet 3: By, with the mouse cursor 188, clicking the second reference 184 or the third reference 186, the user may get to see the video presentation with the higher quality or with the still higher quality. This is done as follows: After the reference has been clicked, the parameters in the file to which the HTML page refers, are read out by the software module. As already described, said parameters are the telephone number which must be called, the type of calling-out equipment required, and the name of the page which must be shown there. The software module disconnects the fixed link to the first server via the Internet 3 and sets up a link to the second server 7 or the third server 8 via the PSTN network 5 or the ISDN network 6, with the name of the HTML page which must be shown there, being sent along. The processor apparatus 74 or the processor apparatus 84, respectively, sees the name of the HTML page which must be shown and, on the basis thereof, looks up the correct data position in the video presentation with the higher quality, which is stored in the storage means 70, or in the video presentation with the still higher quality, which is stored in the storage means 80, respectively. Said parameter is preferably set in such a manner that the video presentation continues at the position where it was discontinued. The telephone number used for setting up said link preferably is a so-called payment number. This offers the operator of the video presentation the opportunity to collect money for the service offered. In the event that the first, second and third server are formed by one single server 4, as shown in FIG. 3, said server 4, if the link is set up via the PSTN network 5, is approached by way of the transmitter/receiver means 72. If the link is set up by way of the ISDN network 6, the server 4 is approached by way of the transmitter/receiver means 82. The processor apparatus 44, which is coupled thereto, sees the name of the HTML page which must be shown and, on the basis thereof, looks up the correct data position in the video presentation with the higher quality, which is stored in the storage means 70, or in the video presentation with the still higher quality, which is stored in the storage means 80. During the video presentation with the higher or the still higher quality, the references 182, 184 and 186 continue to be active. By clicking any of said references, the user may call up yet another quality.

The difference in quality between the video presentation with the basic quality, the video presentation with the higher quality, and the video presentation with the still higher quality, is made possible by the difference in data rates of the various media along which the video presentation is transmitted to the terminal 1. Via an ISDN1B link, there may be transmitted 64 kbit/s. Via an analogue telecommunication link, 28.8 kbit/s currently still is an accepted data rate. However, a private user of the Internet, as a function of the activity, sometimes has a link at his/her disposal of but a few kbit/s. The difference in quality between the various video presentations may be brought to expression in several quality parameters. Thus, if the video presentation also comprises audio, the audio quality of the video presentation with a higher quality may be higher than the audio quality of the video presentation with the basic quality, and the audio quality of the video presentation with a still higher quality may be still higher than the audio quality of the video presentation with the higher quality. In a similar manner, there may also be differences in video quality between the video presentations. The resolution of the video images of the various video presentations may differ, or the number of images shown per unit of time may differ.

Another possibility is that the video presentation with the basic quality comprises only a portion of the entire video presentation and is shown to the user as an "appetiser". The user may then, if the video presentation interests him/her, get to see the video presentation with the higher quality, which comprises the entire video presentation, in the manner described above.

It will be understood by those skilled in the art that the invention is not limited to the exemplary embodiments shown, and that many modifications and amendments are possible without departing from the scope of the invention. Thus, it may be that, by way of an HTML page, there may be called up no video presentation with only a basic quality free of charge, but that the user is obliged to call up a video presentation with a higher quality directly by way of a telecommunications network, such as PSTN or ISDN. Furthermore, it is possible to use other networks than the Internet as a multimedia network, such as "The Net" - a network functioning according to Internet protocols, which will be operated by PTT Telecom in the Netherlands. Instead of by a PSTN network or ISDN network, the telecommunications network may be formed by another network in which the bandwidths of links are guaranteed, e.g., a mobile network, such as GSM. Of course, the system may comprise more telecommunications networks than the two shown or, on the contrary, fewer. Finally, it is possible to have the servers transmit ASP pages [ASP = Association of Shareware Professionals] known per se, instead of HTML pages or pages according to specifications still to be newly developed.

## Claims

1. System for the transmission of data, comprising:
- at least one telecommunications network (2;3;5;6),
- a first server (4), and
- at least one terminal (1) comprising connection means (10,14) for setting up a link for a session with the first server (4) by way of the telecommunications network (2;3;5;6) and for setting up automatically, during a session, by way of the telecommunications network (2;3;5;6), a link with a second server (7;8) as a function of a code stored in the first server (4), such as a telephone number, it being possible for the first server (4) and the second server (7;8) to be one and the same,
**characterised in that** the connection means (10,14) comprise memory loaded with an added software module, the added software module, prior to activation, being provided with parameters comprising the code stored in the first server (4), and **in that** the added software module is subsequently activated for freeing, firstly, the link via the telecommunications network (2;3;5;6) between the terminal (1) and the first server (4) and for subsequently setting up the link between the terminal (1) and the second server (7;8) via the telecommunications network (2;3;5;6).

2. System according to claim 1, **characterised in that** the added software module is provided with parameters by transmitting those parameters from the first server (4) to the terminal (1) by way of the telecommunications network (2;3;5;6).

3. System according to claim 1 or 2, **characterised in that**, each time the first server (4) provides the added software module with parameters, those provided parameters replace the parameters available to the added software module after a prior activation of the added software module.

4. System according to any of the preceding claims, **characterised in that**, on freeing the link between the terminal (1) and the second server (7,8), the link between the terminal (1) and the first server (4) is re-established.

5. System according to any of the preceding claims, **characterised in that** the telephone number, stored in the first server (4), is a payment number.

6. Method for the transmission of data for use in a system comprising:
- a telecommunications network (2;3;5;6),
- a first server (4),
- a second server (7;8),
it being possible for the first server and the second server to be one and the same,
- at least one terminal (1) comprising connection means (10,14),
the method comprising the following steps:
- setting up a link for a session with the first server (4) by way of the telecommunications network (2;3;5;6) and
- setting up automatically, during a session, by way of the telecommunications network (2;3;5;6), a link with the second server (7;8) as a function of a code stored in the first server (4), such as a telephone number,
**characterised in that** the connection means comprise memory loaded with an added software module and **in that** the method further comprises the provision, prior to activation, of the added software module with parameters, comprising the code stored in the first server (4), and the subsequent activation of the added software module for freeing, firstly, by the added software module, of the link via the telecommunications network (2;3;5;6) between the terminal (1) and the first server (4), and, subsequently, the setting up, by the added software module, of the link between the terminal (1) and the second server (7;8) via the telecommunications network (2;3;5;6).

7. Method according to claim 6, **characterised in that** the provision of the added software module with parameters is accomplished by transmitting those parameters from the first server (4) to the terminal (1) by way of the telecommunications network (2;3;5;6).

8. Method according to claim 6 or 7, **characterised in that**, each time the server (4) provides the added software module with parameters, those provided parameters replace the parameters available to the added software module after a prior activation of the added software module.

9. Method according to any of the claims 6 through 8, **characterised in that**, on freeing the link between the terminal (1) and the second server (7,8), the link between the terminal (1) and the first server (4) is re-established.

10. Method according to any of the claims 6 through 9, **characterised in that** the telephone number, stored in the first server (4), is a payment number.

11. Server (4) for use in a system which further comprises a telecommunications network (2;3;5;6) and at least one terminal (1), which terminal comprises connection means (10,14) for setting up a link for a session with the server (4) by way of the telecommunications network (2;3;5;6) and for setting up automatically, during a session, by way of the telecommunications network (2;3;5;6), a link with a further server (7;8) as a function of a code stored in the server (4), such as a telephone number, it being possible for the server (4) and the further server (7;8) to be one and the same,
**characterised in that** the connection means (10,14) comprise memory loaded with an added software module, the added software module, prior to activation, being provided with parameters comprising the code stored in the server (4), and **in that** the added software module is subsequently activated for freeing, firstly, the link via the telecommunications network (2;3;5;6) between the terminal (1) and the server (4) and for subsequently setting up the link between the terminal (1) and the further server (7;8) via the telecommunications network (2;3;5;6).

12. Server (4) according to claim 11, **characterised in that** the server (4) provides the added software module with parameters by transmitting those parameters to the terminal (1) by way of the telecommunications network (2;3;5;6).

13. Server (4) according to claim 11 or 12, **characterised in that**, each time the server (4) provides the added software module with parameters, those provided parameters replace the parameters available to the added software module after a prior activation of the added software module.

14. Server (4) according to any of the claims 11 through 13, **characterised in that** the telephone number, stored in the server (4), is a payment number.

15. Software module on a carrier and comprising computer-terminal-executable instructions for causing a terminal (1) to set up, by way of connection means (10,14) in the terminal (1), a link for a session with a server (4) by way of a telecommunications network (2;3;5;6) and for causing the terminal (1) to set up automatically, during a session, by way of the telecommunications network (2;3;5;6), a link with a further server (7;8) as a function of a code stored in the server (4), such as a telephone number, it being possible for the server (4) and the further server (7;8) to be one and the same, **characterised in that** the software module, upon having been loaded in memory means of the connection means (10,14) and, prior to activation, having been provided with parameters comprising the code stored in the server (4), upon subsequent activation causes, firstly, the link via the telecommunications network (2;3;5;6) between the terminal (1) and the server (4) to be freed and subsequently causes the link between the terminal (1) and the further server (7;8) via the telecommunications network (2;3;5;6) to be set up.

16. Software module according to claim 15, **characterised in that** the provision with parameters is accomplished by transmitting those parameters from the server (4) to the terminal (1) by way of the telecommunications network (2;3;5;6).

17. Software module according to claim 15 or 16, **characterised in that**, each time the server (4) provides the software module with parameters, those provided parameters replace the parameters available to the software module after a prior activation of the software module.

18. Software module according to any of the claims 15 through 17, **characterised in that** the telephone number, contained in the parameters received from the server (4), is a payment number.

19. Software module according to any of the claims 15 through 18, **characterised in that** the carrier is a computer-readable medium, such as a CD-ROM.

20. Software module according to any of the claims 15 through 18, **characterised in that** the carrier is a transmissable carrier, such as an electrical or optical signal which may be conveyed via cable or by radio.
